# EUROPEAN PATENT APPLICATION

(11) **EP 3 848 736 A1**
(43) Date of publication of application: **14.07.2021**
(21) Application number: 19857407.1
(22) Date of filing: 27.08.2019
(51) Int. Cl.: G02B 5/30, B32B 7/023, B32B 17/10

(54) **OPTICAL FILM SET AND OPTICAL MULTILAYER BODY**

(30) Priority: 06.09.2018 JP 2018167043
(71) Applicant: Nitto Denko Corporation, Ibaraki-shi, Osaka 567-8680 (JP)
(72) Inventor: MURASHIGE Takeshi, Ibaraki-shi, Osaka 567-8680 (JP); INAGAKI Junichi, Ibaraki-shi, Osaka 567-8680 (JP); SATO Keisuke, Ibaraki-shi, Osaka 567-8680 (JP); SUGINO Akiko, Ibaraki-shi, Osaka 567-8680 (JP); KAWAMITSU Shoichi, Ibaraki-shi, Osaka 567-8680 (JP); KISHI Atsushi, Ibaraki-shi, Osaka 567-8680 (JP)
(74) Representative: Hoffmann Eitle
(86) International application number: PCT/JP2019/033518
(87) International publication number: WO 2020/050099

(57) **Abstract**

Provided is an optical film set that can prevent the warping of a liquid crystal cell while including a thin glass-integrated polarizing plate. The optical film set of the present invention includes: a first optical film arranged on a viewer side of a liquid crystal cell; and a second optical film arranged on a back surface side of the liquid crystal cell, wherein the first optical film includes a first glass film, a first adhesion layer, and a first polarizing plate, which includes a first polarizer and a first protective film, in the stated order, wherein the first glass film has a thickness of from 50 µm to 150 µm, wherein the first protective film has a modulus of elasticity of 1 GPa or more, wherein the first adhesion layer has a thickness of 10 µm or less, wherein the second optical film includes a second polarizing plate including a second polarizer, and wherein the second polarizer has a thickness of from 1 µm to 10 µm.

## Description

### Technical Field

The present invention relates to an optical film set and an optical laminate.

### Background Art

In recent years, in addition to the advancement of the thinning of a liquid crystal cell and an improvement in definition thereof, a liquid crystal cell mounted with a touch sensor function on its screen for imparting diversity to its interface has started to be used in a wide variety of fields ranging from a cellular phone to an information display. A display panel obtained as described below is generally used as a touch sensor liquid crystal display panel. A film or a glass having a sensor function is laminated on a polarizing plate, and a tempered glass called a front surface plate is arranged on the outermost surface layer of the laminate via a thick pressure-sensitive adhesion layer (OCA) for filling a step on the surface of a sensor. From the viewpoints of thinning and a weight reduction, a liquid crystal panel called an in-cell type liquid crystal panel obtained by incorporating a touch sensor into the glass substate of a liquid crystal cell has recently started to appear.

Meanwhile, the thinning of the tempered glass has also been advancing. However, there is a limit to the thinning because when the thickness of the tempered glass becomes 300 µm or less, the glass self-destructs owing to the compressive stress of the glass. Under such circumstances, an improvement in hardness of the front surface plate through use of a resin has been investigated. In actuality, however, a sufficient hardness has not been obtained. In view of the foregoing, a film-shaped glass called a thin glass has started to attract attention as the front surface plate of a liquid crystal cell. The thin glass can be wound in a roll shape, and hence has an advantage in that the glass is also applicable to a roll-to-roll process. Accordingly, a glass polarizing plate obtained by integrating the glass with a polarizing plate has been proposed.

A touch sensor liquid crystal display panel can be obtained merely by bonding the glass polarizing plate to an in-cell type liquid crystal cell, and hence a process for the production of the panel can be made much simpler as compared to the past configuration using the tempered glass. In addition, the thinning of the panel can be achieved. Accordingly, the combination of the glass polarizing plate and the in-cell type liquid crystal cell is suitable. In addition, when the glass polarizing plate is used in the front surface of an image display apparatus, the chemical resistance of the image display apparatus can be improved.

### Citation List

### Patent Literature

[PTL 1] WO 2013-175767 A1

### Summary of Invention

### Technical Problem

When such glass polarizing plate as described above, which is formed by integrating the thin glass and the polarizing plate with each other, and the related-art polarizing plate are paired, and are arranged so as to sandwich a liquid crystal cell, a problem in that the resultant laminate warps occurs.

The present invention has been made to solve the related-art problem, and an object of the present invention is to provide an optical film set that can prevent the warping of a liquid crystal cell while including a thin glass-integrated polarizing plate.

### Solution to Problem

According to one embodiment of the present invention, there is provided an optical film set, including: a first optical film arranged on a viewer side of a liquid crystal cell; and a second optical film arranged on a back surface side of the liquid crystal cell, wherein the first optical film includes a first glass film, a first adhesion layer, and a first polarizing plate, which includes a first polarizer and a first protective film, in the stated order, wherein the first glass film has a thickness of from 50 µm to 150 µm, wherein the first protective film has a modulus of elasticity of 1 GPa or more, wherein the first adhesion layer has a thickness of 10 µm or less, wherein the second optical film includes a second polarizing plate including a second polarizer, and wherein the second polarizer has a thickness of from 1 µm to 10 µm.

According to one embodiment of the present invention, there is provided an optical film set, including: a first optical film arranged on a viewer side of a liquid crystal cell; and a second optical film arranged on a back surface side of the liquid crystal cell, wherein the first optical film includes a first glass film, a first adhesion layer, and a first polarizing plate, which includes a first polarizer and a first protective film, in the stated order, wherein the first glass film has a thickness of from 50 µm to 150 µm, wherein the first protective film has a modulus of elasticity of 1 GPa or more, wherein the first adhesion layer has a thickness of 10 µm or less, wherein the second optical film includes a second polarizing plate including a second polarizer, a second adhesion layer, and a second glass film in the stated order, wherein the second glass film has a thickness of from 20 µm to 150 µm, and wherein the second adhesion layer has a modulus of elasticity of 1 GPa or more.

In one embodiment, the first polarizing plate has a rectangular shape having a long side and a short side, and an absorption axis direction of the first polarizer and the short side are substantially parallel to each other.

In one embodiment, the second polarizing plate has a rectangular shape having a long side and a short side, and an absorption axis direction of the second polarizer and the long side are substantially parallel to each other.

In one embodiment, the first polarizing plate has a rectangular shape having a long side and a short side, and an absorption axis direction of the first polarizer and the long side are substantially parallel to each other.

In one embodiment, the second polarizing plate has a rectangular shape having a long side and a short side, and an absorption axis direction of the second polarizer and the short side are substantially parallel to each other.

In one embodiment, the first protective film is arranged on at least a first adhesion layer side of the first polarizer.

In one embodiment, the first optical film further includes a first retardation layer.

In one embodiment, the retardation layer is arranged on a side of the first polarizing plate opposite to the first adhesion layer.

In one embodiment, the second optical film further includes a second retardation layer.

In one embodiment, the second optical film further includes an optical layer arranged on at least one side of the second polarizing plate.

In one embodiment, the second optical film further includes an optical layer arranged on at least one side of the second polarizing plate, and the optical layer is arranged on at least a side of the second glass film opposite to the second adhesion layer.

In one embodiment, the optical film set is used for an in-cell type liquid crystal element.

In one embodiment, the optical film set is used for an image display apparatus required to have chemical resistance.

According to another embodiment of the present invention, there is provided an optical laminate, including in an order from a viewer side thereof: the above-mentioned first optical film; a liquid crystal cell; and the above-mentioned second optical film.

In one embodiment, the first glass film, the first adhesion layer, and the first polarizing plate are arranged in the stated order from the viewer side.

In one embodiment, the optical laminate includes in an order from a viewer side thereof: the above-mentioned first optical film; a liquid crystal cell; and the above-mentioned second optical film, and the second polarizing plate, the second adhesion layer, and the second glass film are arranged in the stated order from the viewer side.

In one embodiment, the second optical film further includes an optical layer, and the optical layer is arranged on a side of the second polarizing plate opposite to the viewer side.

In one embodiment, the second optical film further includes an optical layer, and the optical layer is arranged on a side of the second glass film opposite to the viewer side.

In one embodiment, the optical laminate is formed so that an absorption axis of the first polarizer and an absorption axis of the second polarizer are substantially perpendicular to each other.

### Advantageous Effects of Invention

According to the present invention, the optical film set that can prevent the warping of the liquid crystal cell while including the thin glass-integrated polarizing plate can be provided.

### Brief Description of Drawings

FIG. 1 is a schematic sectional view of an optical film set according to one embodiment of the present invention.
FIG. 2 is a schematic sectional view of an optical film set according to another embodiment of the present invention.
FIG. 3 is a schematic sectional view of an optical laminate according to one embodiment of the present invention.
FIG. 4 is a schematic sectional view of an optical laminate according to another embodiment of the present invention.

### Description of Embodiments

### A. Overall Configuration of Optical Film Set

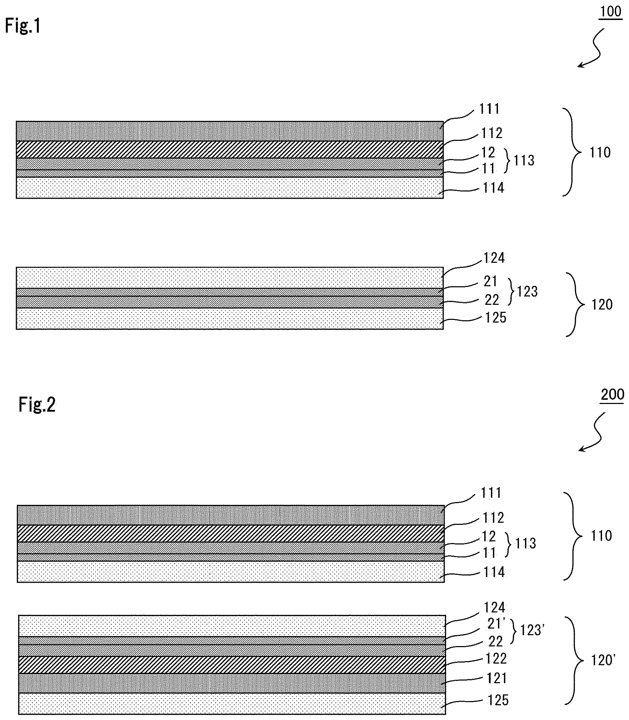

FIG. **1** is a schematic sectional view of an optical film set according to one embodiment of the present invention. An optical film set **100** of FIG. **1** includes a first optical film **110** and a second optical film **120.**

The first optical film **110** includes a first glass film **111,** a first adhesion layer **112,** and a first polarizing plate **113** in the stated order.

The first polarizing plate **113** includes a first polarizer **11** and a first protective film **12.** The first protective film **12** may be arranged on at least one side of the first polarizer **11.** The first protective film **12** is preferably arranged on at least the first adhesion layer **112** side of the first polarizer **11.** The first protective film may be arranged on each of both surfaces of the first polarizer as required.

In one embodiment, the first optical film **110** further includes a first retardation layer **114.** In one embodiment, the first retardation layer **114** is arranged on the side of the first polarizing plate **113** opposite to the first adhesion layer **112.** The first retardation layer **114** may be laminated on the first polarizing plate **113** via any appropriate pressure-sensitive adhesive or adhesive (not shown).

In the embodiment illustrated in FIG. **1****,** the second optical film **120** includes a second polarizing plate **123.** The second polarizing plate **123** includes a second polarizer **21.** In this embodiment, the thickness of the second polarizer **21** is from 1 µm to 10 µm.

In one embodiment, the second polarizing plate **123** further includes a second protective film **22** arranged on at least one side of the second polarizer **21.**

In one embodiment, the second optical film **120** further includes a second retardation layer **124.** The second retardation layer **124** may be laminated on the second polarizing plate **123** via any appropriate pressure-sensitive adhesive or adhesive (not shown) . In one embodiment, the second retardation layer **124,** the second polarizer **21,** and the second protective film **22** are arranged in the stated order.

In one embodiment, the second optical film **120** further includes an optical layer **125** arranged on at least one side of the second polarizing plate **123.** When the second polarizing plate **123** includes the second protective film **22,** the optical layer **125** is preferably arranged on the side of the second protective film **22** opposite to the second polarizer **21.** The optical layer **125** may be laminated on the second polarizing plate **123** via any appropriate pressure-sensitive adhesive or adhesive (not shown). In one embodiment, when the second optical film **120** includes the second retardation layer **124** and the optical layer **125,** the second retardation layer **124** and the optical layer **125** are laminated via the second polarizing plate **123.** In one embodiment, the second retardation layer **124,** the second polarizer **21,** the second protective film **22,** and the optical layer **125** are arranged in the stated order.

FIG. **2** is a schematic sectional view of an optical film set according to another embodiment of the present invention. An optical film set **200** of FIG. **2** includes the first optical film **110** and a second optical film **120'.**

Also in the embodiment illustrated in FIG. **2****,** as in the embodiment illustrated in FIG. **1****,** the first optical film **110** includes the first glass film **111,** the first adhesion layer **112,** and the first polarizing plate **113** in the stated order. In addition, the first polarizing plate **113** includes the first polarizer **11** and the first protective film **12.** The first protective film **12** may be arranged on at least one side of the first polarizer **11.** The first protective film **12** is preferably arranged on at least the first adhesion layer **112** side of the first polarizer **11.** In one embodiment, the first optical film **110** further includes the first retardation layer **114.** In one embodiment, the first retardation layer **114** is arranged on the side of the first polarizing plate **113** opposite to the first adhesion layer **112.**

In the embodiment illustrated in FIG. **2****,** the second optical film **120'** includes a second polarizing plate **123',** a second adhesion layer **122,** and a second glass film **121** in the stated order. The second polarizing plate **123'** includes a second polarizer **21'.**

Also in the embodiment illustrated in FIG. **2****,** as in the embodiment illustrated in FIG. **1****,** the second polarizing plate **123'** may further include the second protective film **22** arranged on at least one side of the second polarizer **21'.** For example, the second protective film **22** is arranged on the second adhesion layer **122** side of the second polarizer **21'.**

Also in the embodiment illustrated in FIG. **2****,** the second optical film **120'** may further include the second retardation layer **124.** The second retardation layer **124** may be laminated on the second polarizing plate **123'** via any appropriate pressure-sensitive adhesive or adhesive (not shown). In one embodiment, the second retardation layer **124** is arranged on the side of the second polarizing plate **123'** opposite to the second glass film **121** (second adhesion layer **122**). In one embodiment, the second retardation layer **124,** the second polarizer **21',** the second protective film **22,** the second adhesion layer **122,** and the second glass film **121** are arranged in the stated order.

In one embodiment, the second optical film **120'** further includes the optical layer **125.** The optical layer **125** is preferably arranged on the side of the second glass film **121** opposite to the second adhesion layer **122.** The optical layer **125** may be laminated on the second glass film **121** via any appropriate pressure-sensitive adhesive or adhesive (not shown). In one embodiment, when the second optical film **120'** includes the second retardation layer **124** and the optical layer **125,** the second retardation layer **124,** the second polarizer **21',** the second protective film **22,** the second adhesion layer **122,** the second glass film **121,** and the optical layer **125** are arranged in the stated order.

In the present invention, the first optical film has a high hardness because the optical film is a thin glass-integrated polarizing plate including the first glass film. In addition, the first optical film includes the first polarizing plate on one side of the first glass film. Accordingly, the breakage of the first glass film can be prevented, and hence the optical film is excellent in puncture resistance. The optical film is considered to be excellent in puncture resistance as described above because point compression applied to the surface of the first optical film or the first glass film can be effectively caused to escape toward the first polarizing plate. Although the first optical film functions as described above, when the first optical film is used as a viewer-side polarizing plate and the related-art polarizing plate is used as a back surface-side polarizing plate at the time of the formation of a liquid crystal panel, the warping of a laminate (first optical film/liquid crystal cell/related-art polarizing plate) including a liquid crystal cell and the polarizing plates tends to be liable to occur. Meanwhile, when the optical film set of the present invention including the first optical film and the second optical film is used, an optical laminate (first optical film/liquid crystal cell/second optical film) reduced in warping can be obtained by arranging these optical films on both sides of the liquid crystal cell. This may be an effect obtained as a result of the fact that the above-mentioned specific second optical film is used as an optical film to be combined with the first optical film that includes the glass film and is hence reduced in dimensional change due to wet heat, and hence a difference in dimensional change between the first optical film and the second optical film can be reduced. As described later, the first optical film is used by being arranged on the viewer side of the liquid crystal cell, and hence can function as the front surface plate of the liquid crystal panel. Meanwhile, the second optical film may be used by being arranged on the back surface side of the liquid crystal cell. The viewer side means a side facing a surface to be viewed when a predetermined member is applied to an image display apparatus. In addition, the back surface side is a side opposite to the viewer side.

The optical film set of the present invention may be used for an image display apparatus . In one embodiment, the optical film set of the present invention is preferably used for an in-cell type liquid crystal element. The in-cell type liquid crystal element is a liquid crystal element including a liquid crystal cell including a substrate having incorporated thereinto a touch sensor. The first optical film may be arranged on the viewer side of the liquid crystal cell, and the second optical film may be arranged on the back surface side of the liquid crystal cell. In addition, the optical film set of the present invention is suitable for an image display apparatus required to have chemical resistance. In such case, the optical film set of the present invention may be used by arranging the first optical film so that the first glass film faces outward.

### B. Overall Configuration of Optical Laminate

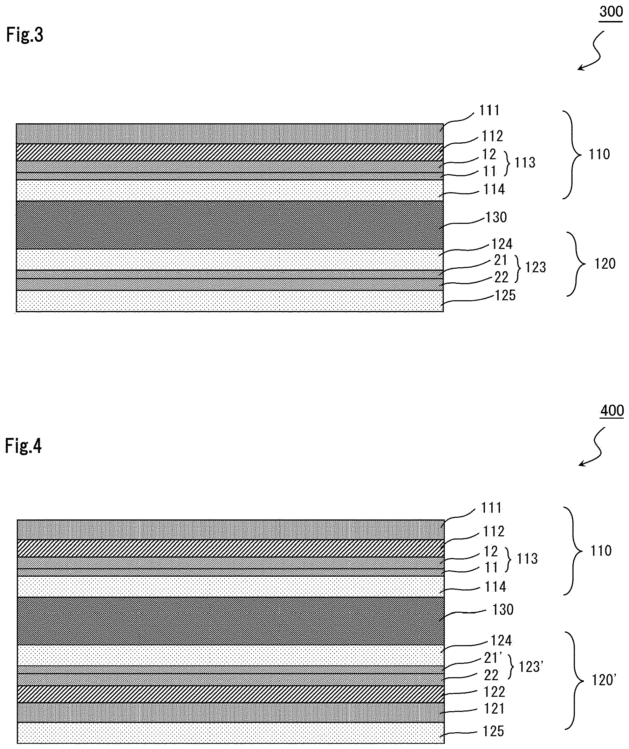

FIG. **3** is a schematic sectional view of an optical laminate according to one embodiment of the present invention. An optical laminate **300** of FIG. **3** includes the first optical film **110,** a liquid crystal cell **130,** and the second optical film **120** in the stated order from its viewer side. The configuration of each of the first optical film **110** and the second optical film **120** is as described in the section A. The first optical film **110** and the second optical film **120** may each be laminated on the liquid crystal cell via any appropriate pressure-sensitive adhesive layer (not shown).

In one embodiment, the first optical film **110** is arranged so that the first glass film **111,** the first adhesion layer **112,** and the first polarizing plate **113** are arranged in the stated order from the viewer side.

As described in the section A, the first polarizing plate **113** includes the first polarizer **11** and the first protective film **12.** The first protective film **12** may be arranged on at least one side of the first polarizer **11.** The first protective film **12** is preferably arranged on at least the viewer side of the first polarizer **11** like the illustrated example. When the first protective film **12** is arranged on the viewer side (i.e., first glass film **111** side) of the first polarizer **11,** an optical film excellent in puncture strength can be obtained.

As described in the section A, the first optical film **110** may further include the first retardation layer **114.** In one embodiment, the first retardation layer **114** is arranged on the side (back surface side) of the first polarizing plate **113** opposite to the viewer side.

In the embodiment illustrated in FIG. **3****,** the second optical film **120** includes the second polarizing plate **123.** The second polarizing plate **123** includes the second polarizer **21.** In one embodiment, the second polarizing plate **123** further includes the second protective film **22** arranged on at least one side of the second polarizer **21.** The second protective film **22** is preferably arranged on at least the back surface side of the second polarizer **21.**

As described in the section A, the second optical film **120** may further include the second retardation layer **124.** The second retardation layer **124** may be laminated on the second polarizing plate **123** via any appropriate pressure-sensitive adhesive or adhesive (not shown). In one embodiment, the second retardation layer **124** is arranged on the viewer side of the second polarizing plate **123.**

As described in the section A, the second optical film **120** may further include the optical layer **125** arranged on at least one side of the second polarizing plate **123.** The optical layer **125** is preferably arranged on at least the side (back surface side) of the second polarizing plate **123** opposite to the viewer side.

FIG. **4** is a schematic sectional view of an optical laminate according to another embodiment of the present invention. An optical laminate **400** of FIG. **4** includes the first optical film **110,** the liquid crystal cell **130,** and the second optical film **120'** in the stated order from its viewer side. The configuration of each of the first optical film **110** and the second optical film **120'** is as described in the section A. The first optical film **110** and the second optical film **120'** may each be laminated on the liquid crystal cell via any appropriate pressure-sensitive adhesive layer (not shown).

Also in the embodiment illustrated in FIG. **4****,** the first polarizing plate **113** includes the first polarizer **11** and the first protective film **12.** The first protective film **12** may be arranged on at least one side of the first polarizer **11.** The first protective film **12** is preferably arranged on at least the viewer side of the first polarizer **11** like the illustrated example. The first polarizing plate **113** may further include the first retardation layer **114.** The first retardation layer **114** may be arranged on the side (back surface side) of the first polarizing plate **113** opposite to the viewer side.

In the embodiment illustrated in FIG. **4****,** the second optical film **120'** includes the second polarizing plate **123',** the second adhesion layer **122,** and the second glass film **121** in the stated order from the viewer side.

As described in the section A, the second polarizing plate **123'** includes the second polarizer **21'.** In one embodiment, the second polarizing plate **123'** further includes the second protective film **22** arranged on at least one side of the second polarizer **21'.** The second protective film **22** is preferably arranged on at least the back surface side of the second polarizer **21'.**

As described in the section A, the second optical film **120'** may further include the second retardation layer **124.** The second retardation layer **124** is preferably arranged on the viewer side of the second polarizing plate **123'.**

As described in the section A, the second optical film **120'** may further include the optical layer **125.** The optical layer **125** is preferably arranged on at least the side (back surface side) of the second glass film **121** opposite to the viewer side.

In one embodiment, in any one of the above-mentioned embodiments, the optical laminate is formed so that the absorption axis of the first polarizer and the absorption axis of the second polarizer are substantially perpendicular to each other. With such configuration, an optical laminate that more hardly warps can be obtained. The phrase "substantially perpendicular" is a concept including not only a case in which the axes are strictly perpendicular to each other but also a case in which an angle formed by both the lines is 90°±10° (preferably 90°±5°).

### C. First Optical Film

### C-1. First Glass Film

Any appropriate glass film may be adopted as the first glass film. According to classification based on composition, examples of the first glass film include soda-lime glass, borate glass, aluminosilicate glass, and quartz glass films. In addition, according to classification based on an alkali component, examples of the first glass film include alkali-free glass and low-alkali glass films. The content of an alkali metal component (e.g., Na₂O, K₂O, Li₂O) in the glass is preferably 15 wt% or less, more preferably 10 wt% or less.

The thickness of the first glass film is preferably from 50 µm to 150 µm, more preferably from 60 µm to 140 µm, still more preferably from 70 µm to 130 µm, particularly preferably from 80 µm to 120 µm. When the thickness falls within such ranges, such an optical film as described below can be obtained: the optical film is excellent in flexibility, and hence can be processed by a roll-to-roll process; and the glass film hardly breaks, and hence the optical film is excellent in productivity.

The first glass film preferably has a light transmittance at a wavelength of 550 nm of 85% or more. The first glass film preferably has a refractive index at a wavelength of 550 nm of from 1.4 to 1.65.

The first glass film has a density of preferably from 2.3 g/cm³ to 3.0 g/cm³, more preferably from 2.3 g/cm³ to 2.7 g/cm³. When the density of the glass film falls within the ranges, an optical film set that can contribute to the weight reduction of an image display apparatus can be provided.

Any appropriate method may be adopted as a forming method for the first glass film. The first glass film is typically produced by melting a mixture containing a main raw material, such as silica or alumina, a fining agent, such as salt cake or antimony oxide, and a reducing agent, such as carbon, at a temperature of from 1, 400°C to 1, 600°C, and forming the molten mixture into a thin sheet shape, followed by cooling. Examples of the forming method for the first glass film include a slot down-draw method, a fusion method, and a float method. The glass film formed in a sheet shape by any one of those methods may be chemically polished with a solvent, such as hydrofluoric acid, as required, in order to reduce its thickness or enhance its smoothness.

### C-2. First Adhesive Layer

The first adhesive layer is formed of any appropriate adhesive. Examples of the adhesive include a polyester-based adhesive, a polyurethane-based adhesive, a polyvinyl alcohol-based adhesive, and an epoxy-based adhesive. Of those, an epoxy-based adhesive is preferred. This is because particularly satisfactory adhesiveness can be obtained.

When the adhesive is a thermosetting adhesive, the adhesive can exhibit a peel-resisting force by being cured (solidified) through heating. In addition, when the adhesive is a photocurable adhesive, such as a UV-curable adhesive, the adhesive can exhibit a peel-resisting force by being cured through irradiation with light, such as UV light. In addition, when the adhesive is a moisture-curable adhesive, the adhesive may react with, for example, moisture in air to cure. Accordingly, the adhesive can cure to exhibit a peel-resisting force even by being left to stand.

For example, a commercial adhesive may be used as the adhesive, or the adhesive may be prepared as an adhesive solution (or dispersion liquid) by dissolving or dispersing various curable resins in a solvent.

The thickness of the first adhesive layer is preferably 10 µm or less, more preferably from 1 µm to 10 µm, still more preferably from 1 µm to 8 µm, particularly preferably from 1 µm to 6 µm. When the thickness falls within such ranges, an optical film that is excellent in flexibility and is excellent in puncture resistance can be obtained.

The modulus of elasticity of the first adhesive layer is preferably from 0.5 GPa to 15 GPa, more preferably from 0.8 GPa to 10 GPa, still more preferably from 1 GPa to 5 GPa. When the modulus of elasticity falls within such ranges, an optical film that is excellent in flexibility and is excellent in puncture resistance can be obtained. In this description, the modulus of elasticity may be measured with an autograph under the following conditions.

### <Method of measuring Modulus of Elasticity>

| | |
|---|---|
| Measurement temperature: | 23°C |
| Sample size: | 2 cm wide by 15 cm long |
| Chuck-to-chuck distance: | 10 cm |
| Tensile rate: | 10 mm/min |

### C-3. First Polarizing Plate

The thickness of the first polarizing plate is preferably from 5 µm to 300 µm, more preferably from 10 µm to 250 µm, still more preferably from 25 µm to 200 µm, particularly preferably from 25 µm to 100 µm.

The modulus of elasticity of the first polarizing plate is preferably 1 GPa or more, more preferably from 1 GPa to 10 GPa, still more preferably from 2 GPa to 7 GPa, particularly preferably from 2 GPa to 5 GPa. When the modulus of elasticity falls within such ranges, an optical film excellent in puncture resistance can be obtained.

In one embodiment, the first polarizing plate has a rectangular shape having a long side and a short side. In addition, as described later, the second polarizing plate may also have a rectangular shape having a long side and a short side. It is preferred that the absorption axis direction of the first polarizer that the first polarizing plate includes and the long side or short side of the first polarizing plate be substantially parallel to each other. The phrase "substantially parallel" as used herein is a concept including not only a case in which the direction and the side are strictly parallel to each other but also a case in which an angle formed by both the lines is ±10° (preferably ±5°). In one embodiment, the absorption axis direction of the first polarizer and the short side of the first polarizing plate are substantially parallel to each other, and the absorption axis of the second polarizer that the second polarizing plate includes and the long side of the second polarizing plate are substantially parallel to each other. In another embodiment, the absorption axis direction of the first polarizer and the long side of the first polarizing plate are substantially parallel to each other, and the absorption axis of the second polarizer that the second polarizing plate includes and the short side of the second polarizing plate are substantially parallel to each other.

### C-3-1. First Polarizer

The first polarizing plate includes the first polarizer. The thickness of the first polarizer is not particularly limited, and an appropriate thickness may be adopted depending on purposes. The thickness is typically from about 1 µm to about 80 µm. In one embodiment, a thin polarizer is used, and the thickness of the polarizer is preferably 20 µm or less, more preferably 15 µm or less, still more preferably 10 µm or less, particularly preferably 6 µm or less.

The first polarizer preferably exhibits absorption dichroism at any wavelength in the wavelength range of from 380 nm to 780 nm. The polarizer has a single axis transmittance of preferably 40.0% or more, more preferably 41.0% or more, still more preferably 42.0% or more, particularly preferably 43.0% or more. The polarizer has a polarization degree of preferably 99.8% or more, more preferably 99.9% or more, still more preferably 99.95% or more.

The first polarizer is preferably an iodine-based polarizer. More specifically, the polarizer may be formed of an iodine-containing polyvinyl alcohol-based resin (hereinafter referred to as "PVA-based resin") film.

Any appropriate resin may be adopted as a PVA-based resin for forming the PVA-based resin film. Examples of the resin include polyvinyl alcohol and an ethylene-vinyl alcohol copolymer. The polyvinyl alcohol is obtained by saponifying polyvinyl acetate. The ethylene-vinyl alcohol copolymer is obtained by saponifying an ethylene-vinyl acetate copolymer. The saponification degree of the PVA-based resin is typically from 85 mol% to 100 mol%, preferably from 95.0 mol% to 99.95 mol%, more preferably from 99.0 mol% to 99.93 mol%. The saponification degree may be determined in conformity with JIS K 6726-1994. The use of the PVA-based resin having such saponification degree can provide a polarizer excellent in durability. When the saponification degree is excessively high, gelling may occur.

The average polymerization degree of the PVA-based resin may be appropriately selected depending on purposes. The average polymerization degree is typically from 1,000 to 10,000, preferably from 1,200 to 5,000, more preferably from 1,500 to 4,500. The average polymerization degree may be determined in conformity with JIS K 6726-1994.

A production method for the first polarizer is, for example, a method (I) including stretching and dyeing a PVA-based resin film alone, or a method (II) including stretching and dyeing a laminate (i) having a resin substrate and a polyvinyl alcohol-based resin layer. Detailed description of the method (I) is omitted because the method is well known and commonly used in the art. The production method (II) preferably includes the step of stretching and dyeing the laminate (i) having the resin substrate and the polyvinyl alcohol-based resin layer formed on one side of the resin substrate to produce a polarizer on the resin substrate. The laminate (i) may be formed by applying an application liquid containing a polyvinyl alcohol-based resin onto the resin substrate and drying the applied liquid. In addition, the laminate (i) may be formed by transferring a polyvinyl alcohol-based resin film onto the resin substrate. For example, details about the production method (II) are described in JP 2012-73580 A, which is incorporated herein by reference.

### C-3-2. First Protective Film

In one embodiment, the first polarizing plate includes the first protective film arranged on at least one side of the first polarizer. Any appropriate resin film may be adopted as the first protective film. As a material for forming the first protective film, there are given, for example: a polyester-based resin, such as polyethylene terephthalate (PET); a cellulose-based resin, such as triacetylcellulose (TAC); a cycloolefin-based resin, such as a norbornene-based resin; an olefin-based resin, such as polyethylene or polypropylene; and a (meth) acrylic resin. Of those, polyethylene terephthalate (PET) is preferred. The term "(meth)acrylic resin" refers to an acrylic resin and/or a methacrylic resin.

In one embodiment, a (meth)acrylic resin having a glutarimide structure is used as the (meth)acrylic resin. The (meth)acrylic resin having a glutarimide structure (hereinafter sometimes referred to as glutarimide resin) is described in, for example, JP 2006-309033 A, JP 2006-317560 A, JP 2006-328329 A, 2006-328334 A, JP 2006-337491 A, JP 2006-337492 A, JP 2006-337493 A, JP 2006-337569 A, JP 2007-009182 A, JP 2009-161744 A, and JP 2010-284840 A. The descriptions thereof are incorporated herein by reference.

The first protective film and the first polarizer are laminated via any appropriate adhesive layer. The resin substrate used at the time of the production of the polarizer may be peeled before the lamination of the first protective film and the first polarizer, or after the lamination.

The thickness of the first protective film is preferably from 4 µm to 250 µm, more preferably from 5 µm to 150 µm, still more preferably from 10 µm to 100 µm, particularly preferably from 10 µm to 50 µm.

The modulus of elasticity of the first protective film is 1 GPa or more, preferably from 1 GPa to 10 GPa, more preferably from 1.8 GPa to 7 GPa, still more preferably from 2 GPa to 5 GPa. When the modulus of elasticity falls within such ranges, an optical film excellent in puncture resistance can be obtained.

### C-4. First Retardation Layer

In one embodiment, the first optical film further includes the first retardation layer. The first retardation layer may have any appropriate optical characteristics and/or mechanical characteristics in accordance with purposes. The first retardation layer typically has a slow axis. Such first retardation layer is appropriately selected in accordance with the alignment mode of the liquid crystal cell.

The refractive index characteristic of the first retardation layer preferably shows a relationship of nx>ny≥nz. The in-plane retardation Re of the first retardation layer may be set to any appropriate value in accordance with applications and the like. The equation "ny=nz" as used herein includes not only a case in which the ny and the nz are completely equal to each other but also a case in which the ny and the nz are substantially equal to each other. Therefore, the ny may be smaller than the nz. An in-plane retardation Re(λ) is an in-plane retardation measured at 23°C with light having a wavelength of λ nm. For example, the symbol "Re(550) " refers to an in-plane retardation measured at 23°C with light having a wavelength of 550 nm. When the thickness of the layer is represented by "d" (nm), the Re (λ) is determined from the equation "Re(λ)=(nx-ny)×d".

The Nz coefficient of the first retardation layer is preferably from 0.1 to 3, more preferably from 0.2 to 1.5, still more preferably from 0.3 to 1.3. The Nz coefficient is determined from the equation "Nz=Rth/Re". The symbol "Rth" refers to a thickness direction retardation measured at 23°C with light having a wavelength of 550 nm. When the thickness of the layer is represented by "d" (nm), the Rth is determined from the equation "Rth=(nx-nz)×d".

The first retardation layer may show such a reverse wavelength dispersion characteristic that its retardation value increases with an increase in wavelength of measurement light, may show such a positive wavelength dispersion characteristic that the retardation value reduces with an increase in wavelength of the measurement light, or may show such a flat wavelength dispersion characteristic that the retardation value is substantially free from being changed by the wavelength of the measurement light.

The thickness of the first retardation layer is preferably 60 µm or less, more preferably from 30 µm to 55 µm, still more preferably 30 µm or less.

The first retardation layer may be formed of any appropriate resin film that can satisfy the above-mentioned characteristics. As typical examples of a resin for forming such resin film, there are given a cyclic olefin-based resin, a polycarbonate-based resin, a cellulose-based resin, a polyester-based resin, a polyvinyl alcohol-based resin, a polyamide-based resin, a polyimide-based resin, a polyether-based resin, a polystyrene-based resin, an acrylic resin, and a polymer liquid crystal resin.

### D. Second Optical Film

The dimensional change of the second optical film is preferably 0.5% or less, more preferably from 0% to 0.2%. In the optical film set of the present invention, the first optical film including the glass film and the second optical film showing such dimensional change as described above are combined. Accordingly, an optical laminate (first optical film/liquid crystal cell/second optical film) reduced in warping can be obtained by arranging those optical films on both sides of the liquid crystal cell. The dimensional change is the product of: a dimensional change ratio when a rectangular sample having a length of X₀ (e.g., 20 cm) in the absorption axis direction of the second polarizer is left at rest under an environment at a temperature of 80°C for 150 hours (|length X₀ in absorption axis direction before test-length X₁ in absorption axis direction after test|/length X₀ in absorption axis direction before test); and 100. The dimensional change may be measured with a planar biaxial length-measuring machine, such as QUICK VISION (manufactured by Mitutoyo Corporation).

Examples of the second optical film showing such dimensional change as described above include (i) the second optical film (FIG. 1) including the thin polarizer (thickness: from 1 µm to 10 µm) and (ii) the second optical film (FIG. 2) including the glass film (second glass film), which have been described in the section A.

### D-1. Second Optical Film including Thin Polarizer

The second optical film including the thin polarizer includes the second polarizing plate. The second polarizing plate includes the second polarizer.

In one embodiment, the second polarizing plate has a rectangular shape having a long side and a short side. It is preferred that the absorption axis direction of the second polarizer that the second polarizing plate includes and the long side or short side of the second polarizing plate be substantially parallel to each other.

In the second optical film including the thin polarizer, the thickness of the second polarizer is from 1 µm to 10 µm, preferably from 2 µm to 7 µm. When the thickness falls within such ranges, a second optical film reduced in dimensional change is obtained. When the second optical film and the above-mentioned first optical film are combined, an optical laminate (first optical film/liquid crystal cell/second optical film) reduced in warping can be obtained by arranging these optical films on both sides of the liquid crystal cell.

In the second optical film including the thin polarizer, the thickness of the second polarizing plate is preferably from 5 µm to 250 µm, more preferably from 10 µm to 200 µm, still more preferably from 25 µm to 200 µm, particularly preferably from 25 µm to 100 µm.

The contents described in the section C-3-1 are given as examples of the single layer transmittance, material, production method, and the like of the second polarizer in the second optical film including the thin polarizer.

In the second optical film including the thin polarizer, the second polarizing plate may include the second protective film arranged on at least one side of the second polarizer. The protective film described in the section C-3-2 may be used as the second protective film.

As described above, the second optical film including the thin polarizer may further include the second retardation layer. The retardation layer described in the section C-4 may be adopted as the second retardation layer.

As described above, the second optical film including the thin polarizer may further include the optical layer. Examples of the optical layer include an antireflection layer and an antiglare layer. The thickness of the optical layer is, for example, from 1 µm to 200 µm.

### D-2. Second Optical Film including Glass Film

As described above, the second optical film including the glass film includes the second polarizing plate, the second adhesion layer, and the second glass film in the stated order. When the second optical film including the glass film and the above-mentioned first optical film are combined, an optical laminate (first optical film/liquid crystal cell/second optical film) reduced in warping can be obtained by arranging these optical films on both sides of the liquid crystal cell.

The polarizing plate described in the section C-3 may be used as the second polarizing plate (and the second polarizer and the second protective film that the second polarizing plate includes) in the second optical film including the glass film. In one embodiment, the second polarizing plate in the second optical film including the glass film has a rectangular shape having a long side and a short side. It is preferred that the absorption axis direction of the second polarizer that the second polarizing plate includes and the long side or short side of the second polarizing plate be substantially parallel to each other.

The modulus of elasticity of the second adhesion layer is preferably 1 GPa or more, more preferably from 1 GPa to 10 GPa, still more preferably from 2 GPa to 8 GPa, particularly preferably from 2 GPa to 5 GPa. When the modulus of elasticity falls within such ranges, the dimensional change of the second optical film can be suppressed while the flexibility thereof is maintained.

The contents described in the section C-2 are given as examples of the material, thickness, and the like of the second adhesion layer.

The thickness of the second glass film is preferably from 20 µm to 150 µm, more preferably from 40 µm to 130 µm, still more preferably from 60 µm to 110 µm. When the thickness falls within such ranges, an optical functional film excellent in flexibility can be obtained. In one embodiment, the second glass film is thinner than the first glass film is. This is because while the first glass film is required to have some degree of strength because the glass film is in direct contact with the outside, the second glass film only needs to be capable of suppressing the dimensional change of the resin of the second optical film and being processed by a roll-to-roll process.

The contents described in the section C-1 are given as examples of the material, transmittance, refractive index, density, forming method, and the like of the second glass film.

Also in the second optical film including the glass film, the second optical film may further include the second retardation layer. The retardation layer described in the section C-4 may be adopted as the second retardation layer.

Also in the second optical film including the glass film, the second optical film may further include the optical layer.

### E. Pressure-sensitive Adhesive Layer

The first optical film and the second optical film may each be laminated on the liquid crystal cell via any appropriate pressure-sensitive adhesive layer. The pressure-sensitive adhesive layer is formed of any appropriate adhesive. A pressure-sensitive adhesive containing, for example, an acrylic polymer, a silicone-based polymer, polyester, polyurethane, polyamide, polyether, or a fluorine-based or rubber-based polymer as a base polymer is used as the pressure-sensitive adhesive. Of those, an acrylic pressure-sensitive adhesive is preferably used. This is because the acrylic pressure-sensitive adhesive is excellent in optical transparency, shows moderate wettability, moderate cohesiveness, and a moderate pressure-sensitive adhesive characteristic, such as an adhesive property, and may be excellent in, for example, weatherability and heat resistance. An acrylic pressure-sensitive adhesive formed of an acrylic polymer having 4 to 12 carbon atoms is particularly preferred.

The thickness of the pressure-sensitive adhesive layer is preferably from 1 µm to 100 µm, more preferably from 3 µm to 80 µm, still more preferably from 3 µm to 50 µm. When the thickness falls within such ranges, an optical laminate that is excellent in flexibility and is excellent in puncture resistance can be obtained.

### Examples

The present invention is specifically described below by way of Examples, but the present invention is not limited to these Examples. In addition, in Examples, "part(s)" and "%" are by weight unless otherwise specified.

### [Production Example 1] Preparation of Polarizing Plate A

### (Preparation of Polarizer)

First, a laminate obtained by forming a 9-micrometer thick PVA layer on an amorphous PET substrate was subjected to in-air auxiliary stretching at a stretching temperature of 130°C to produce a stretched laminate. Next, the stretched laminate was subjected to dyeing to produce a colored laminate. Further, the colored laminate was subjected to in-boric-acid-solution stretching at a stretching temperature of 65°C so that the total stretching ratio became 5.94 times. Thus, an optical film laminate including a 4-micrometer thick PVA layer stretched together with the amorphous PET substrate was produced. Such two-stage stretching was able to produce an optical film laminate including the 4-micrometer thick PVA layer, the layer forming such a high-function polarizer that the PVA molecules of the PVA layer formed on the amorphous PET substrate were aligned in a high order, and iodine caused to adsorb to the polarizer by the dyeing was aligned as a polyiodide ion complex in one direction in a high order.

### (Preparation of Acrylic Film)

A methacrylic resin pellet having a glutarimide ring unit was dried at 100.5 kPa and 100°C for 12 hours, and was extruded from the T-die of a uniaxial extruder at a die temperature of 270°C to be formed into a film shape. The film was stretched in its conveying direction (MD direction) under an atmosphere having a temperature higher than the Tg of the resin by 10°C. Next, the film was stretched in the direction (TD direction) perpendicular to the film-conveying direction under an atmosphere having a temperature higher than the Tg of the resin by 7°C. Thus, an acrylic film having a thickness of 40 µm and a modulus of elasticity of 2.5 GPa was obtained.

### (Preparation of Curable Adhesive)

35 Parts by weight of N-hydroxyethyl acrylamide HEAA (manufactured by Kohjin Co., Ltd.), 45 parts by weight of N-acryloylmorpholine ACMO (manufactured by Kohjin Co., Ltd.), 25 parts by weight of polypropylene glycol diacrylate TPGDA (manufactured by Toagosei Co., Ltd., product name: "ARONIX M-220"), 3 parts by weight of a photopolymerization initiator (manufactured by Ciba Specialty Chemicals, product name: "IRGACURE 184"), and 1.5 parts by weight of another photopolymerization initiator (manufactured by Nippon Kayaku Co., Ltd., product name: "KAYACURE DETX-S") were mixed. Thus, a curable adhesive was obtained.

### (Production of Polarizing Plate)

The curable adhesive was applied in an application thickness of about 1 µm onto the polarizer produced on the PET film. Next, the acrylic film having a thickness of 40 µm was bonded to the adhesion layer. The adhesive was irradiated with UV light having a peak UV irradiance of 1,600 mW/cm² and a UV integrated light quantity of 1,000 mJ/cm² (wavelength: from 380 nm to 440 nm), which had been emitted from a conveyor-type UV irradiation apparatus (manufactured by FUSION UV SYSTEMS), from the PET film side to be cured, and the cured adhesive was dried at 70°C for 2 minutes. Finally, the PET film was peeled from the laminate obtained by laminating the acrylic film, the polarizer, and the PET film. Thus, a laminate (a polarizing plate A having a thickness of 44 µm) of the acrylic film (protective film) and the polarizer was obtained.

### [Production Example 2] Preparation of Polarizing Plate B

A polyvinyl alcohol film (PVA) having a thickness of 100 µm was stretched at up to 3 times between rolls having different speed ratios while being dyed in an iodine solution at 30°C having a concentration of 0.3% for 1 minute. After that, the film was stretched so that the total stretching ratio became 6 times while being immersed in an aqueous solution at 60°C containing boric acid at a concentration of 4% and potassium iodide at a concentration of 10% for 0.5 minute. Next, the film was washed by being immersed in an aqueous solution at 30°C containing potassium iodide at a concentration of 1.5% for 10 seconds. After that, the film was dried at 50°C for 4 minutes to provide a polarizer having a thickness of 28 µm. A triacetylcellulose film (TAC) having a thickness of 40 µm and a modulus of elasticity of 3.6 GPa subjected to a saponification treatment was bonded to one surface of the polarizer with a polyvinyl alcohol-based adhesive, and an acrylic resin film having a thickness of 30 µm and a modulus of elasticity of 2.5 GPa was bonded to the other surface thereof with the adhesive. Thus, a polarizing plate B (thickness: 98 µm) was obtained.

### [Production Example 3] Preparation of Polarizing Plate C

A polarizing plate C (thickness: 73 µm) was obtained in the same manner as in Production Example 2 except that: the thickness of the polarizer was set to 10 µm; and a norbornene-based resin film having a thickness of 23 µm and a modulus of elasticity of 1.9 GPa was used instead of the acrylic resin film.

### [Production Example 4] Preparation of Polarizing Plate D

A polarizing plate D (thickness: 70 µm) was obtained in the same manner as in Production Example 3 except that the thickness of the polarizer was set to 7 µm.

### [Production Example 5] Preparation of Polarizing Plate E

A polarizing plate E (thickness: 91 µm) was obtained in the same manner as in Production Example 3 except that the thickness of the polarizer was set to 28 µm.

### [Production Example 6] Preparation of Polarizing Plate F

A polarizing plate F (thickness: 77 µm) was obtained in the same manner as in Production Example 2 except that the thickness of the polarizer was set to 7 µm.

### [Production Example 7] Preparation of Polarizing Plate G

A polarizing plate G was obtained in the same manner as in Production Example 1 except that the thickness of the polarizer was set to 15 µm.

### [Production Example 8] Preparation of Pressure-sensitive Adhesive

### (Preparation of Acrylic Polymer)

100 Parts by weight of butyl acrylate, 5 parts by weight of acrylic acid, and 0.075 part by weight of 2-hydroxyethyl acrylate, 0.2 part by weight of 2,2'-azobisisobutyronitrile serving as a polymerization initiator, and 200 parts by weight of ethyl acetate serving as a polymerization solvent were loaded into a four-necked flask including a stirring blade, a temperature gauge, a nitrogen gas-introducing tube, and a condenser. After air in the flask had been sufficiently purged with nitrogen, the mixed liquid, whose temperature in the flask was kept at around 55°C, was subjected to a polymerization reaction for 10 hours while being stirred in a stream of nitrogen. Thus, an acrylic polymer solution was prepared. The acrylic polymer had a weight-average molecular weight of 2,200,000.

### (Preparation of Pressure-sensitive Adhesive Composition)

100 Parts by weight of the solid content of the acrylic polymer solution was uniformly mixed with 0.2 part by weight of dibenzoyl peroxide (NYPER BMT, manufactured by Nippon Oil & Fats Co., Ltd.) serving as a peroxide, 0.05 part by weight of diglycidylaminomethylcyclohexane (manufactured by Mitsubishi Gas Chemical Company, Inc., TETRAD-C) serving as an epoxy-based cross-linking agent, 0.1 part by weight of a trimethylolpropane-tolylene diisocyanate adduct (manufactured by Nippon Polyurethane Industry Co., Ltd., CORONATE L) serving as an isocyanate-based cross-linking agent, and 0.075 part by weight of a silane coupling agent (manufactured by Shin-Etsu Chemical Co., Ltd., KBM-403), followed by stirring. Thus, an acrylic pressure-sensitive adhesive (solid content: 10.9wt%) wasprepared.

### [Production Example 9] Preparation of Adhesive

### (Preparation of Epoxy Adhesive)

70 Parts by weight of CELLOXIDE 2021P (manufactured by Daicel Chemical Industries, Ltd.), 5 parts by weight of EHPE 3150, 19 parts by weight of ARON OXETANE OXT-221 (manufactured by Toagosei Co., Ltd.), 4 parts by weight of KBM-403 (manufactured by Shin-Etsu Chemical Co., Ltd.), and 2 parts by weight of CPI-101A (manufactured by San-Apro Ltd.) were compounded to prepare an epoxy adhesive.

### [Example 1]

### (Production of First Optical Film A)

A glass film (manufactured by Nippon Electric Glass Co., Ltd., product name: "OA-10G", thickness: 100 µm) and the polarizing plate A produced in Production Example 1 were bonded to each other via an adhesion layer including the adhesive prepared in Production Example 9. At this time, the polarizing plate A was arranged so that the acrylic film was on the glass film side. Next, UV light (500 mJ/cm²) was applied from a high-pressure mercury lamp to the adhesion layer to cure the adhesion layer. Thus, a first optical film A was obtained. The thickness and modulus of elasticity of the adhesion layer were set to 5 µm and 1.8 GPa, respectively.

### (Preparation of Second Optical Film A)

The polarizing plate A produced in Production Example 1 was prepared as a second optical film A.

### (Production of Evaluation Laminate A)

A glass plate (13.3 inches, 296 mm×168 mm, thickness: 0.4 mm) regarded as a glass cell was prepared.

The first optical film A was cut into a size measuring 295 mm by 163 mm so that the absorption axis direction and short side of the polarizer were parallel to each other.

The second optical film A was cut into a size measuring 295 mm by 163 mm so that the absorption axis direction and long side of the polarizer were parallel to each other.

The first optical film A was laminated on one surface of the glass plate so that the respective short sides of the glass plate and the first optical film A were parallel to each other, and the polarizing plate A (polarizer) was on a glass plate side.

The second optical film A was laminated on the other surface of the glass plate so that the respective short sides of the glass plate and the second optical film A were parallel to each other, and the polarizer was on a glass plate side.

The first optical film A and the second optical film A were each laminated on the glass plate via a pressure-sensitive adhesive layer (thickness: 20 µm) including the pressure-sensitive adhesive prepared in Production Example 8.

The pressure-sensitive adhesive layer was formed as follows:
(i) the pressure-sensitive adhesive was applied onto a silicone-treated polyethylene terephthalate film (manufactured by Mitsubishi Chemical Polyester Film Co., Ltd., thickness: 38 µm), and was heated at 155°C for 1 minute to form the pressure-sensitive adhesive layer having a thickness after the drying of 20 µm; and
(ii) the pressure-sensitive adhesive layer was transferred from the polyethylene terephthalate film onto the polarizing plate A to form the pressure-sensitive adhesive layer.

An evaluation laminate A was produced as described above.

### [Example 2]

### (Production of First Optical Film B)

A first optical film B was obtained in the same manner as in Example 1 except that the polarizing plate B was used instead of the polarizing plate A. The polarizing plate B was arranged so that the TAC film (40 µm) was on the glass film side.

### (Preparation of Second Optical Film C)

The polarizing plate C produced in Production Example 3 was prepared as a second optical film C.

### (Production of Evaluation Laminate B)

An evaluation laminate B was produced in the same manner as in Example 1 except that: the first optical film B was used instead of the first optical film A; and the second optical film C was used instead of the second optical film A. The first optical film B was laminated so that the polarizing plate B (acrylic resin film (30 µm)) was on the glass plate side. In addition, the second optical film C was laminated so that the norbornene-based resin film (23 µm) was on the glass plate side.

### [Example 3]

### (Production of First Optical Film B')

A first optical film B' was obtained in the same manner as in Example 2 except that a glass film (manufactured by Nippon Electric Glass Co., Ltd., product name: "OA-10G", thickness: 50 µm) was used instead of the glass film (manufactured by Nippon Electric Glass Co., Ltd., product name: "OA-10G", thickness: 100 µm).

### (Preparation of Second Optical Film A)

The polarizing plate A produced in Production Example 1 was prepared as a second optical film A.

### (Production of Evaluation Laminate C)

An evaluation laminate C was produced in the same manner as in Example 1 except that the first optical film B' was used instead of the first optical film A. The first optical film B' was laminated so that the polarizing plate B (acrylic resin film (30 µm)) was on the glass plate side.

### [Example 4]

### (Production of First Optical Film A')

A first optical film A' was obtained in the same manner as in Example 1 except that a glass film (manufactured by Nippon Electric Glass Co., Ltd., product name: "OA-10G", thickness: 150 µm) was used instead of the glass film (manufactured by Nippon Electric Glass Co., Ltd., product name: "OA-10G", thickness: 100 µm).

### (Preparation of Second Optical Film D)

The polarizing plate D produced in Production Example 4 was prepared as a second optical film D.

### (Production of Evaluation Laminate D)

An evaluation laminate D was produced in the same manner as in Example 1 except that: the first optical film A' was used instead of the first optical film A; and the second optical film D was used instead of the second optical film A. The first optical film A' was laminated so that the polarizing plate A (polarizer) was on the glass plate side. In addition, the second optical film D was laminated so that the norbornene-based resin film (23 µm) was on the glass plate side.

### [Example 5]

### (Production of First Optical Film A)

A first optical film A was produced in the same manner as in Example 1.

### (Preparation of Second Optical Film (i))

A polarizer was produced as described in Production Example 1.

The adhesive prepared in Production Example 9 was applied to the polarizer (PVA layer) produced on the PET film to form an adhesion layer. Next, a glass film (manufactured by Nippon Electric Glass Co., Ltd., product name: "OA-10G", thickness: 50 µm) was bonded to the adhesion layer. The adhesive was irradiated with UV light having a peak UV irradiance of 1,600 mW/cm² and a UV integrated light quantity of 1,000 mJ/cm² (wavelength: from 380 nm to 440 nm), which had been emitted from a conveyor-type UV irradiation apparatus (manufactured by FUSION UV SYSTEMS), from the PET film side to be cured. Next, the PET film was peeled from the polarizer (PVA layer).

A second optical film (i) including the polarizer (5 µm), the adhesion layer (thickness: 5 µm, modulus of elasticity: 1.8 GPa), and the glass film (50 µm) was obtained as described above.

### (Production of Evaluation Laminate E)

An evaluation laminate E was obtained in the same manner as in Example 1 except that the second optical film (i) was used instead of the second optical film A. The second optical film (i) was laminated so that the polarizer was on the glass plate side.

### [Example 6]

### (Production of First Optical Film B')

A first optical film B' was produced in the same manner as in Example 3.

### (Preparation of Second Optical Film (ii))

A polarizing plate A (thickness: 44 µm) was produced as described in Production Example 1.

The adhesive prepared in Production Example 9 was applied onto the acrylic resin film side of the polarizing plate A to form an adhesion layer. Next, a glass film (manufactured by Nippon Electric Glass Co., Ltd., product name: "OA-10G", thickness: 50 µm) was bonded to the adhesion layer. The adhesive was irradiated with UV light having a peak UV irradiance of 1,600 mW/cm² and a UV integrated light quantity of 1,000 mJ/cm² (wavelength: from 380 nm to 440 nm), which had been emitted from a conveyor-type UV irradiation apparatus (manufactured by FUSION UV SYSTEMS), from the PET film side to be cured.

A second optical film (ii) including the polarizing plate A, the adhesion layer (thickness: 5 µm, modulus of elasticity: 1.8 GPa), and the glass film (50 µm) was obtained as described above.

### (Production of Evaluation Laminate F)

An evaluation laminate F was obtained in the same manner as in Example 3 except that the second optical film (ii) was used instead of the second optical film A. The second optical film (ii) was laminated so that the polarizing plate A was on the glass plate side.

### [Comparative Example 1]

### (Production of First Optical Film A)

A first optical film A was produced in the same manner as in Example 1.

### (Preparation of Second Optical Film E)

The polarizing plate E produced in Production Example 5 was prepared as a second optical film E.

### (Production of Evaluation Laminate G)

An evaluation laminate G was produced in the same manner as in Example 1 except that the second optical film E was used instead of the second optical film A. The second optical film E was laminated so that the norbornene-based resin film (23 µm) was on the glass plate side.

### [Comparative Example 2]

### (Production of First Optical Film A)

A first optical film A was produced in the same manner as in Example 1.

### (Preparation of Second Optical Film G)

The polarizing plate G produced in Production Example 7 was prepared as a second optical film G.

### (Production of Evaluation Laminate H)

An evaluation laminate H was produced in the same manner as in Example 1 except that the second optical film G was used instead of the second optical film A. The second optical film G was laminated so that the polarizer was on the glass plate side.

### [Comparative Example 3]

### (Production of First Optical Film A")

A pressure-sensitive adhesive layer was formed by using the pressure-sensitive adhesive produced in Production Example 8 as described below. The pressure-sensitive adhesive was applied onto a silicone-treated polyethylene terephthalate film (manufactured by Mitsubishi Chemical Polyester Film Co., Ltd., thickness: 38 µm), and was heated at 155°C for 2 minutes to form the pressure-sensitive adhesive layer (modulus of elasticity: 0.2 MPa) called an optical clear adhesive film (OCA film), which had a thickness after the drying of 150 µm. The acrylic resin film surface of the polarizing plate A produced in Production Example 1 was bonded to the pressure-sensitive adhesive layer. Next, the polyethylene terephthalate film was peeled, and a glass film (manufactured by Nippon Electric Glass Co., Ltd., product name: "OA-10G", thickness: 100 µm) was bonded to the surface of the pressure-sensitive adhesive layer opposite to the polarizing plate A. Thus, a first optical film A" was obtained.

### (Preparation of Second Optical Film A)

A second optical film A was produced in the same manner as in Example 1.

### (Production of Evaluation Laminate I)

An evaluation laminate I was obtained in the same manner as in Example 1 except that the adhesion layer of the first optical film was changed to the pressure-sensitive adhesive layer having a thickness of 150 µm as described above.

### <Evaluation>

The evaluation laminates obtained in Examples and Comparative Examples were subjected to the following evaluations. The results are shown in Table 1.

### (1) Warping Amount

Each of the produced evaluation laminates was left at rest under an environment at 80°C for 240 hours, and was then placed on the measurement stand of a two-dimensional measuring instrument "NEXIV VMR-12072" manufactured by Nikon Corporation while its first optical film was directed upward. Next, a focus was put on the surface of the measurement stand, and then a focus was put on each of the four corner portions of the evaluation laminate, the respective centers of the four sides thereof, and the center of the surface of the evaluation laminate (a total of nine points) with reference to the surface of the measurement stand. Distances from the focus serving as a reference were measured, and then the longest distance from the measurement stand in terms of absolute value was adopted as a warping amount. A warping amount of 2 mm or less was defined as being acceptable (o in Table 1).

### (2) Puncture Strength

A 5-centimeter square evaluation laminate was bonded to a glass plate to provide an evaluation sample. A jig for a film puncture test (TKS-20N/250N (in conformity with JIS Z 1707:1997, manufactured by Imada Co., Ltd.)) was attached to a motorized vertical force gauge stand (manufactured by Nidec-Shimpo Corporation) . The evaluation sample was placed on the stage of the stand, and the sample was punctured with a puncture rod (ϕ0.5 mm) at a rate of 20 mm/min. An indentation load when the glass broke was measured with the force gauge and adopted as the puncture strength of the sample. A puncture strength of 5 Kg or more was defined as being acceptable (o in Table 1).

### (3) Moduli of Elasticity of Protective Film and Adhesion Layer (and Pressure-sensitive Adhesive Layer)

The SS curve of each of a protective film and an adhesion layer was measured with an autograph under the following conditions, and the modulus of elasticity thereof was determined from the rise-up of the SS curve.

### <Method of measuring Modulus of Elasticity>

| | |
|---|---|
| Measurement temperature: | 23°C |
| Sample size: | 2 cm wide by 15 cm long |
| Chuck-to-chuck distance: | 10 cm |
| Tensile rate: | 10 mm/min |

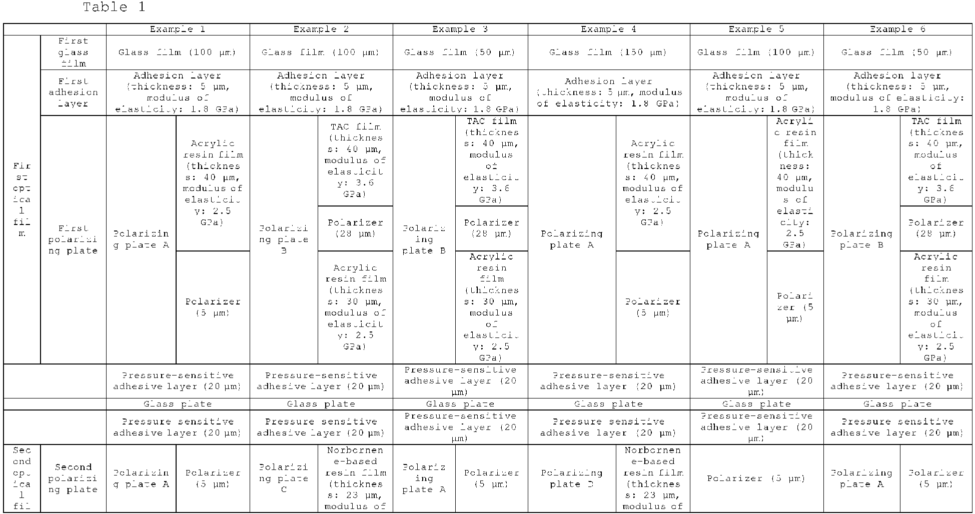

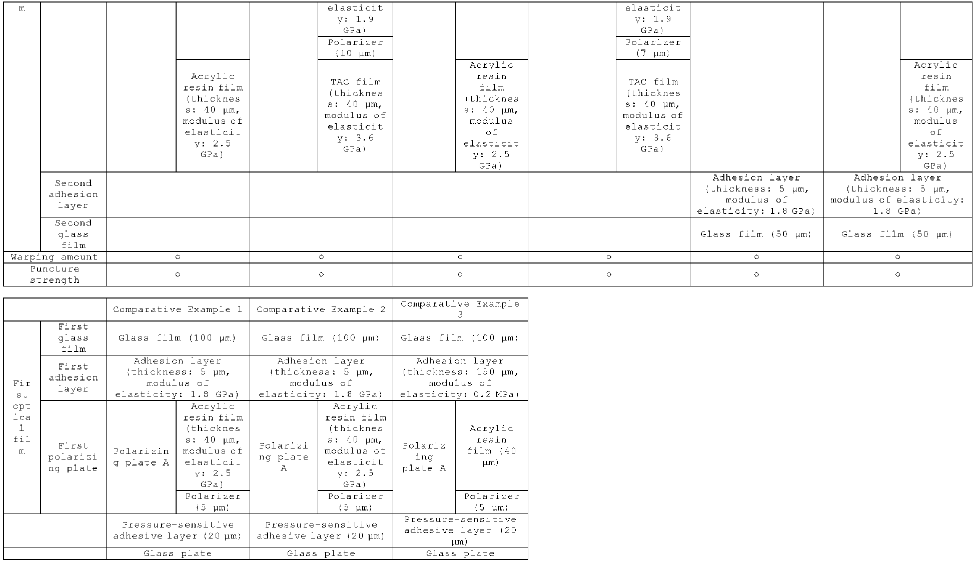

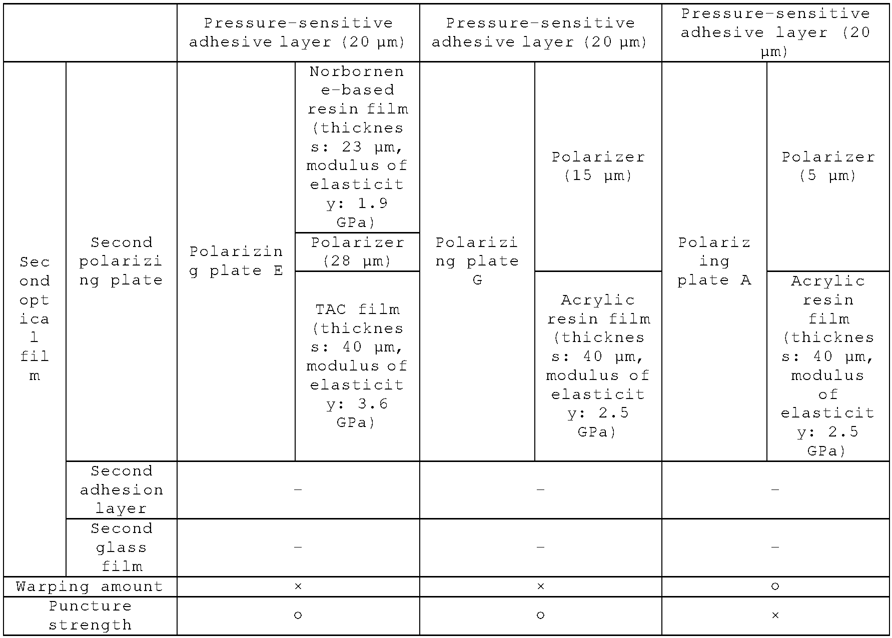

### Reference Signs List

- **11**: first polarizer
- **12**: first protective film
- **21, 21'**: second polarizer
- **22**: second protective film
- **110**: first optical film
- **111**: first glass film
- **112**: first adhesion layer
- **113**: first polarizing plate
- **114**: first retardation layer
- **120, 120'**: second optical film
- **123, 123'**: second polarizing plate
- **124**: second retardation layer
- **125**: optical layer
- **100, 200**: optical film set
- **300, 400**: optical laminate

## Claims

1. An optical film set, comprising:
a first optical film arranged on a viewer side of a liquid crystal cell; and
a second optical film arranged on a back surface side of the liquid crystal cell,
wherein the first optical film includes a first glass film, a first adhesion layer, and a first polarizing plate, which includes a first polarizer and a first protective film, in the stated order,
wherein the first glass film has a thickness of from 50 µm to 150 µm,
wherein the first protective film has a modulus of elasticity of 1 GPa or more,
wherein the first adhesion layer has a thickness of 10 µm or less,
wherein the second optical film includes a second polarizing plate including a second polarizer, and
wherein the second polarizer has a thickness of from 1 µm to 10 µm.

2. An optical film set, comprising:
a first optical film arranged on a viewer side of a liquid crystal cell; and
a second optical film arranged on a back surface side of the liquid crystal cell,
wherein the first optical film includes a first glass film, a first adhesion layer, and a first polarizing plate, which includes a first polarizer and a first protective film, in the stated order,
wherein the first glass film has a thickness of from 50 µm to 150 µm,
wherein the first protective film has a modulus of elasticity of 1 GPa or more,
wherein the first adhesion layer has a thickness of 10 µm or less,
wherein the second optical film includes a second polarizing plate including a second polarizer, a second adhesion layer, and a second glass film in the stated order,
wherein the second glass film has a thickness of from 20 µm to 150 µm, and
wherein the second adhesion layer has a modulus of elasticity of 1 GPa or more.

3. The optical film set according to claim 1 or 2,
wherein the first polarizing plate has a rectangular shape having a long side and a short side, and
wherein an absorption axis direction of the first polarizer and the short side are substantially parallel to each other.

4. The optical film set according to claim 3,
wherein the second polarizing plate has a rectangular shape having a long side and a short side, and
wherein an absorption axis direction of the second polarizer and the long side are substantially parallel to each other.

5. The optical film set according to claim 1 or 2,
wherein the first polarizing plate has a rectangular shape having a long side and a short side, and
wherein an absorption axis direction of the first polarizer and the long side are substantially parallel to each other.

6. The optical film set according to claim 5,
wherein the second polarizing plate has a rectangular shape having a long side and a short side, and
wherein an absorption axis direction of the second polarizer and the short side are substantially parallel to each other.

7. The optical film set according to any one of claims 1 to 6, wherein the first protective film is arranged on at least the first adhesion layer side of the first polarizer.

8. The optical film set according to any one of claims 1 to 7, wherein the first optical film further includes a first retardation layer.

9. The optical film set according to claim 8, wherein the first retardation layer is arranged on a side of the first polarizing plate opposite to the first adhesion layer.

10. The optical film set according to any one of claims 1 to 9, wherein the second optical film further includes a second retardation layer.

11. The optical film set according to any one of claims 1 to 10, wherein the second optical film further includes an optical layer arranged on at least one side of the second polarizing plate.

12. The optical film set according to claim 2,
wherein the second optical film further includes an optical layer arranged on at least one side of the second polarizing plate, and
wherein the optical layer is arranged on at least a side of the second glass film opposite to the second adhesion layer.

13. The optical film set according to any one of claims 1 to 12, wherein the optical film set is used for an in-cell type liquid crystal element.

14. The optical film set according to any one of claims 1 to 12, wherein the optical film set is used for an image display apparatus required to have chemical resistance.

15. An optical laminate, comprising in an order from a viewer side thereof:
the first optical film of any one of claims 1 to 12;
a liquid crystal cell; and
the second optical film of any one of claims 1 to 12.

16. The optical laminate according to claim 15, wherein the first glass film, the first adhesion layer, and the first polarizing plate are arranged in the stated order from the viewer side.

17. An optical laminate, comprising in an order from a viewer side thereof:
the first optical film of any one of claims 1 to 12;
a liquid crystal cell; and
the second optical film of claim 2,
wherein the second polarizing plate, the second adhesion layer, and the second glass film are arranged in the stated order from the viewer side.

18. The optical laminate according to claim 15 or 16,
wherein the second optical film further includes an optical layer, and
wherein the optical layer is arranged on a side of the second polarizing plate opposite to the viewer side.

19. The optical laminate according to claim 17,
wherein the second optical film further includes an optical layer, and
wherein the optical layer is arranged on a side of the second glass film opposite to the viewer side.

20. The optical laminate according to any one of claims 15 to 19, wherein the optical laminate is formed so that an absorption axis of the first polarizer and an absorption axis of the second polarizer are substantially perpendicular to each other.
